# EUROPEAN PATENT SPECIFICATION

(11) **EP 4 259 952 B1**
(45) Date of publication and mention of the grant of the patent: **30.10.2024**
(21) Application number: 21835401.7
(22) Date of filing: 14.12.2021
(51) Int. Cl.: F16H 3/54, F16F 15/12, F16H 1/28, E05F 15/60

(54) **ELECTROMECHANICAL TRANSMISSION APPARATUS FOR ACTUATION SYSTEMS FOR GUIDANCE SYSTEMS OF AN AIRCRAFT**
ELEKTROMECHANISCHE GETRIEBEVORRICHTUNG FÜR BETÄTIGUNGSSYSTEME FÜR FÜHRUNGSSYSTEME EINES FLUGZEUGS
APPAREIL DE TRANSMISSION ÉLECTROMÉCANIQUE POUR SYSTÈMES D'ACTIONNEMENT POUR SYSTÈMES DE GUIDAGE D'UN AÉRONEF

(30) Priority: 14.12.2020 IT 202000030668
(43) Date of publication of application: 18.10.2023
(73) Proprietor: Officine Meccaniche Aeronautiche S.p.A. (In Sigla O.M.A. S.p.A.), 06034 Foligno (IT)
(72) Inventor: FERRARA, Gennaro, 06034 Foligno (IT); ROSATA, Pietro, 06039 Trevi (IT)
(74) Representative: Modiano, Micaela Nadia
(86) International application number: PCT/IB2021/061703
(87) International publication number: WO 2022/130200

(56) References cited:
- EP-A2- 1 653 033
- US-A- 6 125 586

## Description

The present invention relates to an actuation system for guidance systems of an aircraft, and particularly to an electromechanical transmission apparatus for this type of systems.

The present invention is therefore useful and practical in the field of actuation systems in the aviation sector.

In even greater detail, the present invention is particularly but not exclusively useful for interacting with the primary flight controls of an aircraft.

In this specific technical field, and in particular for so-called "All-Electric" aviation, there is a continuous search for electromechanical solutions for "Safety-Critical" actuation, i.e., solutions that guarantee safety even in case of electrical or mechanical failures.

In this field, a particularly relevant technical problem is represented by the reliability of electromechanical devices and of the associated multistage reduction unit.

In fact, mechanical failures (for example seizures) in this type of apparatus have dangerous or even catastrophic effects in aircraft.

Currently, this technical problem is addressed by means of safety devices and mechanical redundancies that have the disadvantage of entailing bulky and expensive architectures.

The aim of the present invention is to provide an actuation system for guidance systems of an aircraft that solves the technical problem described above, obviates the drawbacks and overcomes the limitations of the background art, being capable of ensuring safety even in case of seizures or other failures (fail-safe/fail-passive design).

Within the scope of this aim, an object of the present invention is to provide an actuation system that has an architecture that is compact and less bulky than that of the background art.

Another object of the invention is to provide an actuation system that is highly reliable.

Another object of the invention is to provide an actuation system that is easy and economical to provide if compared with the background art.

Not least object of the invention is to provide a valid alternative to the background art.

This aim and these and other objects that will become better apparent hereinafter are achieved by an electromechanical transmission apparatus for actuation systems for guidance systems of an aircraft according to claim 1.

An example of an electromechanical transmission can be found on US6125586A.

Further characteristics and advantages will become better apparent from the description of a preferred but not exclusive embodiment of an electromechanical transmission apparatus and of an actuation system for guidance systems of an aircraft comprising said apparatus, illustrated by way of non-limiting example with the aid of the accompanying drawings, wherein:
Figure 1 is a schematic view of an actuation system comprising the electromechanical transmission apparatus according to the invention;
Figure 2 is the same view as Figure 1, in which the kinematic flows during operation in the active configuration, in direct mode, are shown;
Figure 3 is the same view as Figure 1, in which the kinematic flows during operation in the active configuration, in inverse mode, are shown;
Figure 4 is the same view as Figure 1, in which the kinematic flows during operation in the passive configuration, in the presence of a jamming of the driving element, are shown;

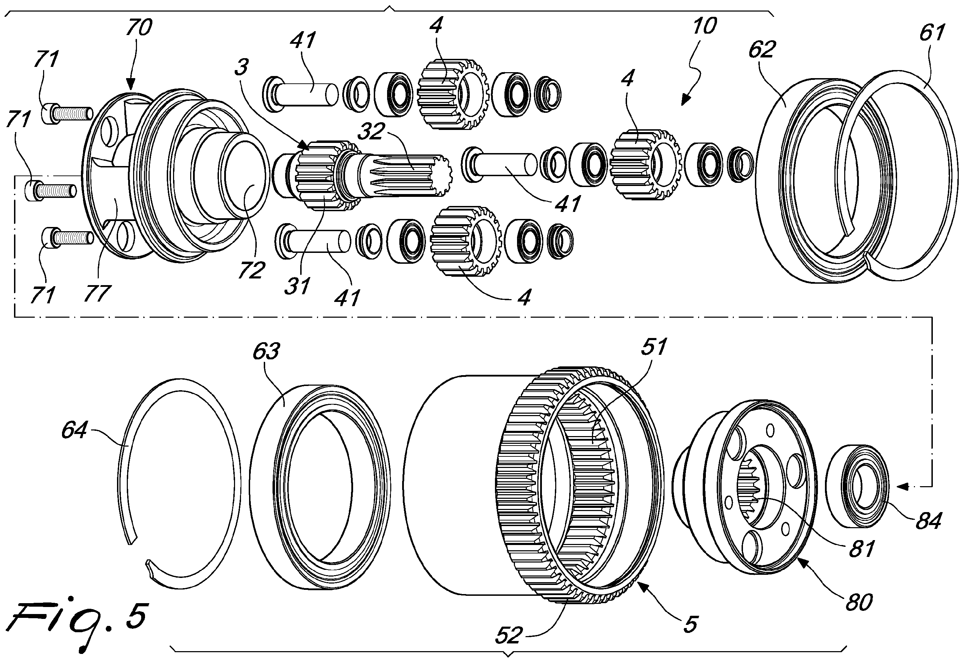

Figure 5 is an exploded view of a possible embodiment of the planetary gear system comprised in the electromechanical transmission apparatus according to the invention;

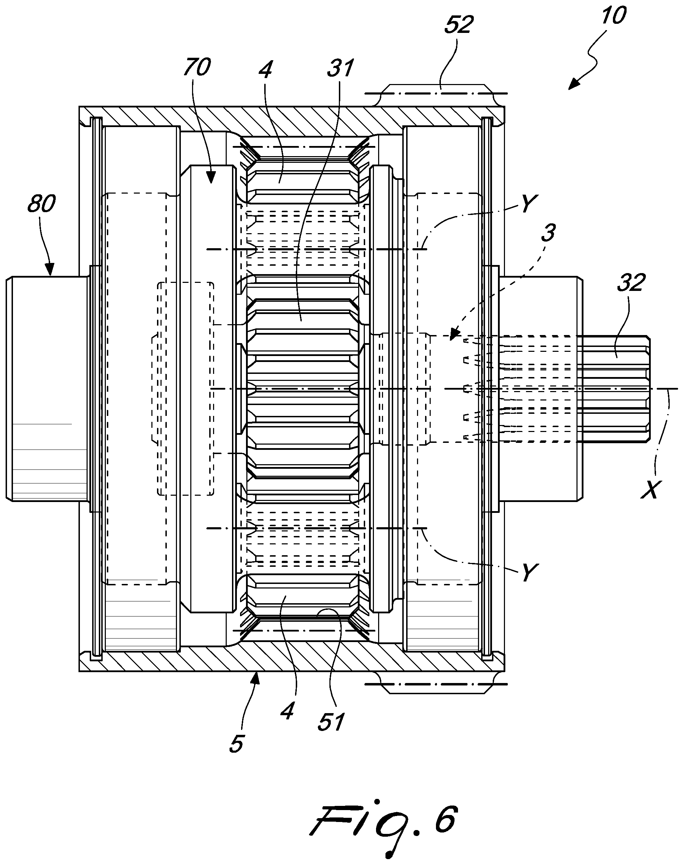

Figure 6 is a sectional view, taken along a first plane, of the planetary gear system of Figure 5;

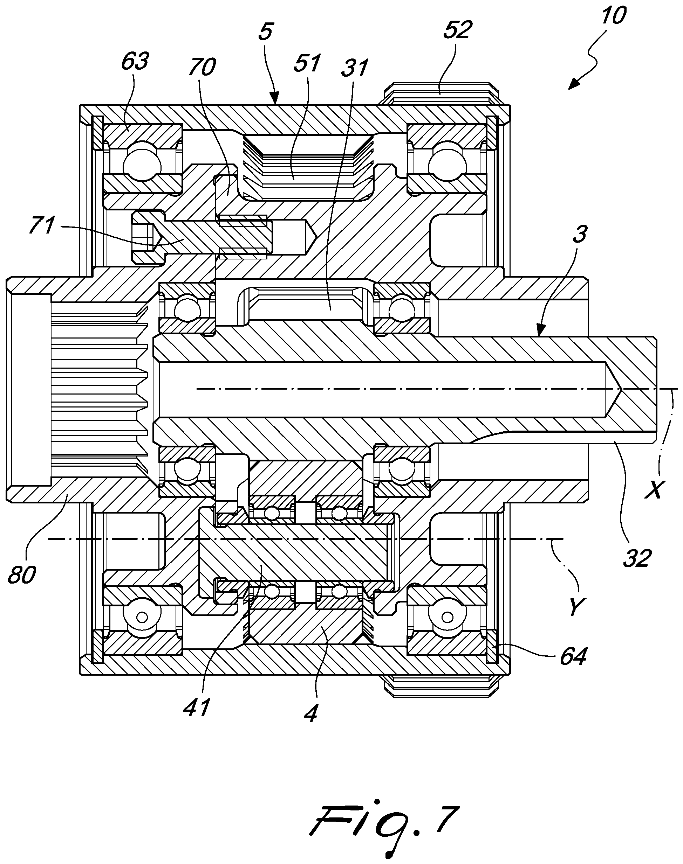

Figure 7 is a sectional view, taken along a second plane which is parallel to the first plane, of the planetary gear system of Figure 5;

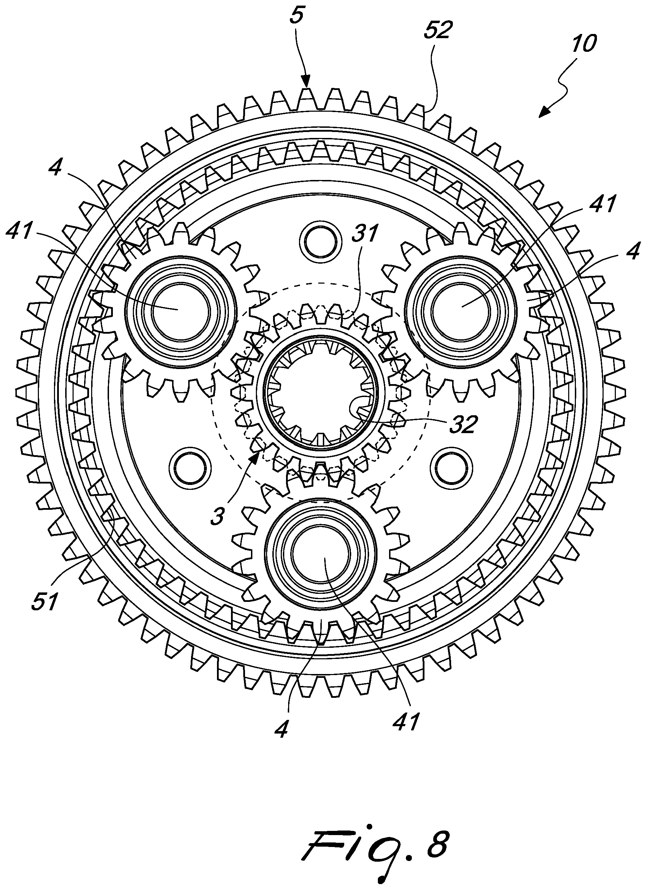

Figure 8 is a sectional view, taken along a third plane at right angles to the first plane, of the planetary gear system of Figure 5.

With reference to the figures, the electromechanical transmission apparatus for actuation systems for guidance systems of an aircraft is generally designated by the reference numeral 1.

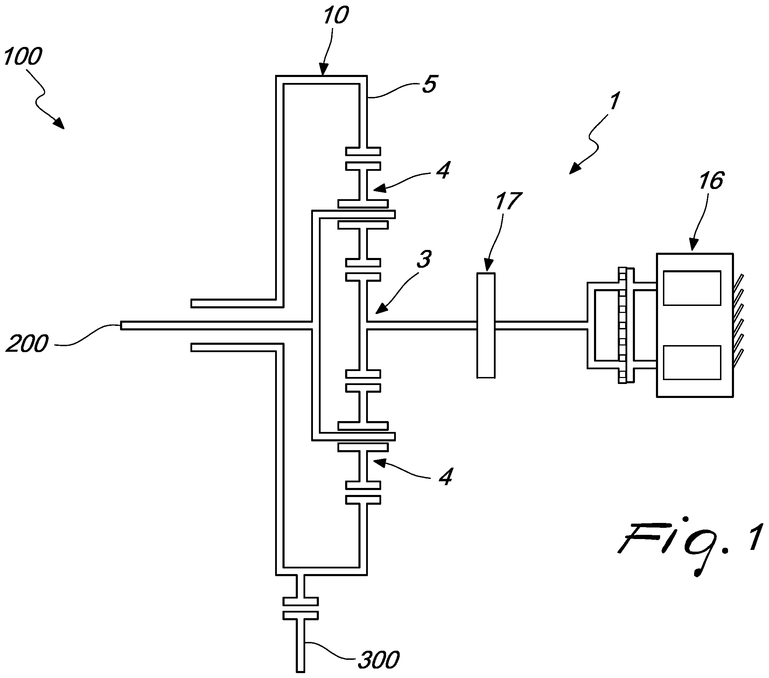

Figure 1 shows schematically the architecture of the electromechanical transmission apparatus 1 inserted in an actuation system 100 which also comprises a driving element 300 and an output shaft 200, to which the electromechanical transmission apparatus 1 is functionally mechanically connected.

The driving element 300 is in practice a mechanical element which is adapted to transmit motion mechanically and is actuated by an electric motor or other motor; said driving element 300 can comprise for example a gear which is rigidly fixed to a driving shaft which is actuated rotationally by an electric motor.

The electromechanical transmission apparatus 1 comprises a planetary (i.e., epicyclic) gear system (or gear) that is designated by the reference numeral 10.

The planetary gear system 10, as a whole, has a cylindrical geometry, extending around a main central axis X.

The planetary gear system 10 is configured to provide a kinematic transmission between the driving element 300 and the output shaft 200.

In the preferred embodiments, including the one shown, the planetary gear system 10 is configured to provide a speed reduction from the driving element 300 to the output shaft 200, in practice acting as a gearmotor.

As will become better apparent hereinafter, the planetary gear system 10 can be actuated also in an inverse mode, in which it provides a speed multiplication from the output shaft 200 to the driving element 300.

In greater detail, the planetary gear system 10 comprises a central sun gear 3 which can rotate about a main central axis X and a plurality of planet gears 4 which are rotatably coupled to a planet carrier 70 (mounted thereon), i.e., so as to be free to rotate each about its own axis Y, being for example hinged to the planet carrier 70 by means of respective pivots 41.

The planet carrier 70 can in turn rotate about the main central rotation axis X, integrally with the planet gears 4 (i.e., entraining said planet gears 4 in rotation about the central rotation axis X).

Therefore, the planet gears 4 are capable of rotating about their own axis of rotation Y and also of performing, simultaneously, a movement of revolution about the central sun gear 3, meshing therewith and, simultaneously, with the internal set of teeth.

The planet gears 4 are arranged along a circumference and in the preferred and illustrated embodiment are three and mutually equidistant.

Preferably, the planet carrier 70 comprises a carousel body 77 which supports the planet gears 4 and also comprises, or is fixed to, a base 80 provided with a coupling seat 81, which is conveniently provided with a coupling set of teeth for coupling to the output shaft 200.

The base 80 is fixed to the carousel body 77 with appropriate fixing elements 71 (for example screws).

The carousel body 77, which is shaped like a carousel, comprises a central tunnel 72 in which the central sun gear 3 is at least partially accommodated.

The sun gear 3 preferably comprises a shaft end 32 provided with external set of teeth adapted to be optionally engaged by a hub for coupling it rotationally with the sun gear 3.

The planetary gear system 10 comprises furthermore an external ring gear 5, which is provided with an internal set of teeth 51 and an external set of teeth 52.

Said external ring gear 5 also is able to rotate about the main central axis X, has a substantially tubular cylindrical shape and accommodates inside it the planet carrier 70 with the planet gears 4 and the central sun gear 3.

In practice, the planet gears 4 mesh with the central sun gear 3 and also with the internal set of teeth 51 of the external ring gear 5, while the external set of teeth 52 of said external ring gear 5 is adapted to mesh with the driving element 300.

The planet carrier 70, as already mentioned, can be coupled to the output shaft 200 so that a kinematic chain is formed between the driving element 300 and the output shaft 200.

The planetary gear system 10 comprises furthermore all the additional supporting and fixing elements necessary to ensure the operation and the stability of the structure, such as for example fixing rings 61, 64, bearings 62, 63, etcetera, which can be selected by the person skilled in the art according to the requirements and the state of the art.

According to the invention, the electromechanical transmission apparatus 1 comprises an electromechanical brake 16 and a viscoelastic damper 17, which are functionally connected to each other and functionally connected to the central sun gear 3.

The viscoelastic damper 17 is a device that, in a known manner, dissipates energy through frictions and/or deformations of passive components that may include mechanical springs, dampers, polymeric or glass-like materials that dissipate energy as a result of tangential deformations.

The viscoelastic damper 17 is functionally connected to the central sun gear 3 so as to dissipate its kinetic energy of rotation.

In the preferred embodiment, the central sun gear 3 comprises a first toothed portion 31 which meshes with the planet gears 4 and a second longitudinally extended portion 32 which protrudes outside the external ring gear 5 and is connected to the viscoelastic damper 17. This longitudinally extended portion 32 also is preferably provided with a set of teeth.

According to the invention, the electromechanical brake 16 is configured to lock and release selectively the viscoelastic damper 17 and the central sun gear 3 so that the electromechanical transmission apparatus 1 can be configured in an active configuration and in a passive configuration depending on whether the electromechanical brake locks or releases the viscoelastic damper 17 and the central sun gear 3, respectively.

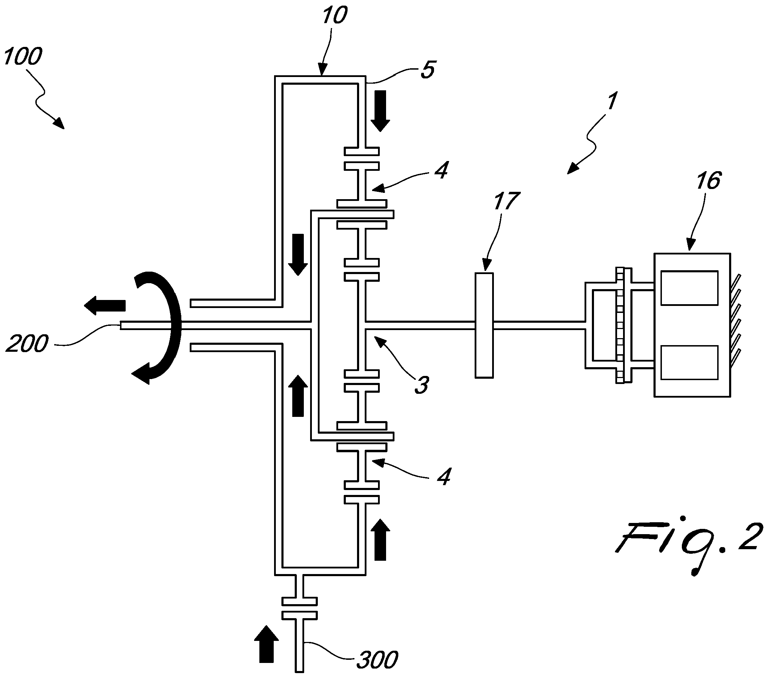

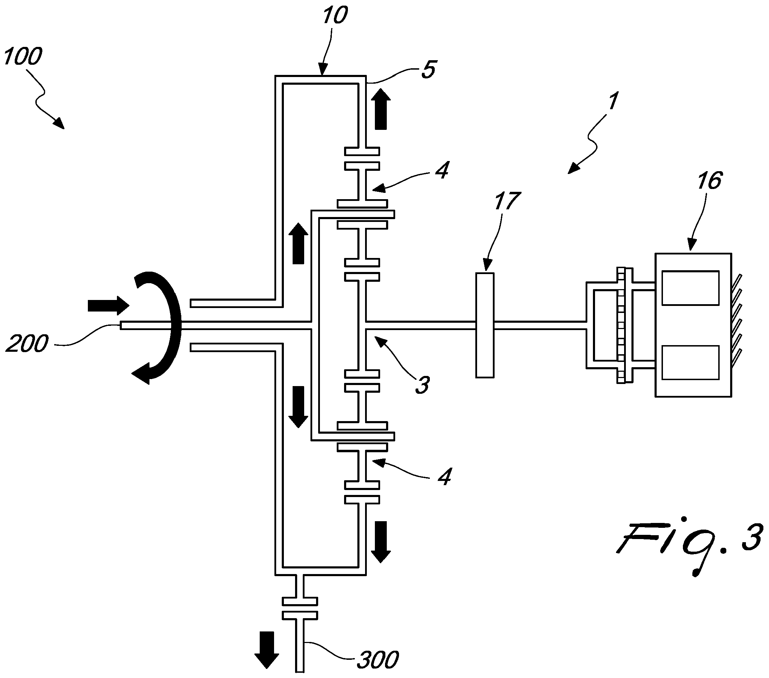

In the active configuration, the viscoelastic damper 17 and the central sun gear 3 are locked by the electromechanical brake 16 and the planetary gear system 10 is consequently able to transmit the motion from the driving element 300 to the output shaft 200 in order to reduce the rotation rate, by means of the rotation of the external ring gear 5 which induces the rotation of the planet carrier 70, as shown in Figure 2, or vice versa (i.e., transmit the motion from the output shaft to the driving element 300 through the reverse path, so as to multiply the rotation rate, as shown in Figure 3).

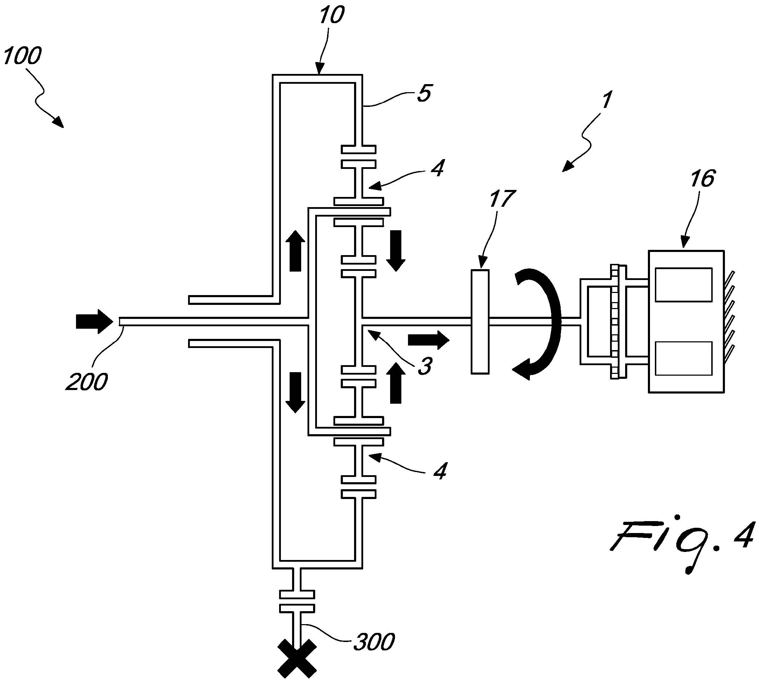

In the passive configuration, the electromechanical brake 16 releases (i.e., frees) the viscoelastic damper 17 and the central sun gear 3 so that the latter is free to rotate so that a rotation of the output shaft 200 induces the rotation of the planet gears 4, which in turn induces the rotation of the central sun gear 3, which is damped by the viscoelastic damper 17 (this occurs for example when the external ring gear 5 is locked by a locking situation of the driving element 300, as shown in Figure 4).

According to the invention, the electromechanical transmission apparatus 1 also comprises an electronic control unit (not shown) configured to control the electromechanical brake 16 so as to let pass the transmission apparatus 1 from the active configuration to the passive configuration when a blocking condition of the driving element 300 occurs which blocks the external ring gear 5.

The transition from the active configuration to the passive configuration can occur advantageously for example in case of a failure or seizure in the electrical or mechanical section of the motor connected to the driving element 300 which is no longer able to rotate and consequently, in the active configuration, the output shaft 200 also would be locked.

In the passive configuration, the viscoelastic damper 17 allows a gentle and damped rotation of the output shaft 200 and of the planet carrier 70, preventing a floating behavior beyond the reversibility friction torque.

The electronic control unit can be configured to monitor the operation of the driving element 300 to intervene, for example, when it is blocked, by activating the electromechanical brake 16, and also to perform the reverse operation by deactivating the mechanical brake 16.

The transition from the active configuration to the passive configuration, and vice versa, is therefore fully reversible and can be repeated according to the requirements.

In the actuation system 100, the electronic control unit also controls the motor that actuates the driving element as a function of the inputs of the pilot.

In the actuation system 100 shown, the electromechanical transmission apparatus 1 is mechanically connected to the driving element 300 (which is actuated by a motor) and to the output shaft 200 so as to transmit the motion from the driving element 300 to the output shaft 200, and more precisely the driving element 300 meshes with the external set of teeth 52 of the external ring gear 5 and the output shaft 200 is rotationally coupled to the planet carrier 70. However, in other embodiments each element of the planetary gear system 10 can be used as input, output or fixed element, and for each configuration it is possible to obtain a different reduction ratio between the input side and the output side.

The operation of the electromechanical transmission apparatus 1 and of the actuation system 100 as a whole is clear and evident from what has been described.

During operation in an aircraft, in a preferred constructive application, the active configuration is the predefined mode of operation in which the actuation system 100:
- generates a force-feedback sensation to the pilot under the control of the electronic control unit, by means of the actuation of the motor and of he planetary gear system 10 connected thereto, and therefore to the output shaft 200, in response to the force inputs of the pilot;
- generates a mechanical movement of the output shaft 200 in response to a remote request, for example by a Flight Control Computer (FCC), by means of the actuation of the motor and of the planetary gear system 10 connected thereto.

The passive configuration is the mode of operation in which the actuation system 100 does not generate active kinetic energy of rotation but provides a feeling of resistance through the use of passive components such as mechanical springs, frictions and dampers, and in particular the viscoelastic damper 17, bypassing the potential failures of the mechanical part.

Essentially, the described solution provides a differential epicyclic reduction unit with dual load path capable of:
- providing the necessary mechanical reduction in normal operating mode,
- providing a switchable load path in the event of mechanical seizure, preventing jamming of the output shaft 200 of the actuation system and maintaining a consistent behavior.

In practice it has been found that the electromechanical transmission apparatus and the actuation system, according to the present invention, achieve the intended aim and objects, since they have a compact and less bulky architecture than the background art.

Another advantage of the electromechanical transmission apparatus and of the actuation system according to the invention is that they ensure safety even in the event of seizures or other failures.

An additional advantage of the electromechanical transmission apparatus and of the actuation system, according to the invention, resides in that they are easy and economical to provide if compared with the background art.

Another advantage of the electromechanical transmission apparatus and of the actuation system, according to the invention, is that they are highly reliable.

The electromechanical transmission apparatus and the actuation system thus conceived are susceptible of numerous modifications and variations, all of which are within the scope of the accompanying claims.

All the details may furthermore be replaced with other technically equivalent elements.

In practice, the materials used, as well as the contingent shapes and dimensions, may be any according to the requirements and the state of the art.

The disclosures in Italian Patent Application no. 102020000030668, from which this application claims priority, are incorporated by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An electromechanical transmission apparatus (1) for actuation systems for guidance systems of an aircraft, comprising a planetary gear system (10) configured to provide a kinematic transmission between a driving element (300) and an output shaft (200);
wherein said planetary gear system (10) comprises: a central sun gear (3) which can rotate about a main central rotation axis (X), a plurality of planet gears (4) coupled rotatably to a planet carrier (70) which in turn can rotate about the main central rotation axis (X), and an external ring gear (5) provided with an internal set of teeth (51) and with an external set of teeth (52); said planet gears (4) meshing with the central sun gear (3) and with said internal set of teeth (51) of the external ring gear (5), said external set of teeth (52) being adapted to mesh with the driving element (300), said planet carrier (70) being associable with the output shaft (200),
**characterized in that** it further comprises:
- an electromechanical brake (16) and a viscoelastic damper (17) which are functionally connected to each other and functionally connected to said central sun gear (3),
said electromechanical brake (16) being configured to lock and release selectively the viscoelastic damper (17) and the central sun gear (3) so that said electromechanical transmission apparatus (1) can be configured:
in an active configuration, in which the viscoelastic damper (17) and the central sun gear (3) are locked by the electromechanical brake (16) and the planetary gear system (10) is able to transmit motion from the driving element (300) to the output shaft (200) by means of the rotation of the external ring gear (5) which induces the rotation of the planet carrier (70), or vice versa, and
in a passive configuration, in which the electromechanical brake (16) releases the viscoelastic damper (17) and the central sun gear (3) so that the latter is free to rotate so that a rotation of the output shaft (200) induces the rotation of the planet gears (4), which in turn induces the rotation of the central sun gear (3), which is damped by the viscoelastic damper (17); and
- an electronic control unit configured to control the electromechanical brake (16) so as to make the transmission apparatus (1) pass from said active configuration to said passive configuration when a locking condition of the driving element (300) occurs.

2. The electromechanical transmission apparatus (1) according to claim 1, wherein said planet gears (4) are mounted so that they are hinged on said planet carrier (70) so as to rotate about their own axis of rotation (Y) and rotate integrally about the central rotation axis (X) with said planet carrier (70).

3. The electromechanical transmission apparatus (1) according to one or more of the preceding claims, **characterized in that** said planetary gear system (10) is configured to provide a speed reduction from said driving element (300) to said output shaft (200), or a speed multiplication from said output shaft (200) to said driving element (300).

4. The electromechanical transmission apparatus (1) according to one or more of the preceding claims, wherein said planet gears (4) are three.

5. The electromechanical transmission apparatus (1) according to one or more of the preceding claims, wherein said planet carrier (70) comprises a carousel body (77) which supports said planet gears (4) and also comprises, or is fixed to, a base (80) provided with a coupling seat (81) for coupling to the output shaft (200).

6. The electromechanical transmission apparatus (1) according to one or more of the preceding claims, wherein said central sun gear (3) comprises a first toothed portion (31) which meshes with the planet gears (4) and a second longitudinally extended portion (32) which protrudes outside the external ring gear (5) and is connected to the viscoelastic damper (17).

7. An actuation system (100) for guidance systems of an aircraft, comprising:
- a driving element (300) actuated by a motor;
- an output shaft (200) which is or can be coupled to a device of the aircraft to drive it;
- an electromechanical transmission apparatus (1) according to one or more of the preceding claims, which is mechanically connected to said driving element (300) and to said output shaft (200) so as to transmit the motion from the driving element (300) to the output shaft (200) or vice versa.

8. The actuation system (100) according to claim 7, wherein said driving element (300) meshes with the external set of teeth (52) of said external ring gear (5) and said output shaft (200) is rotationally coupled to said planet carrier (70).

9. The actuation system (100) according to claim 7 or 8, wherein said electronic control unit is configured to monitor the operation of the driving element (300) and to induce the transition to said passive configuration when it detects a locking situation, actuating said electromechanical brake (16).

10. The actuation system (100) according to one or more of claims 7 to 9, wherein said electromechanical transmission apparatus (1), when it is in the active configuration, can be actuated in an inverse mode, in which the viscoelastic damper (17) and the central sun gear (3) are locked by the electromechanical brake (16) and a rotation imparted to the output shaft (200) is transmitted to the driving element (300) by means of the planetary gear system (10), in which the rotation of the output shaft (200) induces a rotation of the planet carrier (70) and therefore a rotation of the planet gears (4), which in turn induces a rotation of the external ring gear (5), which induces the rotation of the driving element (300).

## Patentansprüche

1. Eine elektromechanische Getriebevorrichtung (1) für Antriebssysteme für Führungssysteme eines Flugzeugs, die ein Planetenradsystem (10) umfasst, ausgebildet, um für eine kinematische Übertragung zwischen einem Antriebselement (300) und einer Abtriebswelle (200) zu sorgen;
wobei das Planetenradsystem (10) Folgendes umfasst: ein zentrales Tellerrad (3), welches sich um eine zentrale Haupt-Drehachse (X) drehen kann, eine Vielzahl von Umlaufrädern (4), die drehbar mit einem Planetenradträger (70) gekoppelt sind, welcher sich wiederum um die zentrale Haupt-Drehachse (X) drehen kann, und ein externes Hohlrad (5), das mit einem inneren Zahnkranz (51) und mit einem äußeren Zahnkranz (52) ausgestattet ist; wobei die Umlaufräder (4) in das zentrale Tellerrad (3) und in den inneren Zahnkranz (51) des externen Hohlrades (5) eingreifen, wobei der äußere Zahnkranz (52) ausgebildet ist, um in das Antriebselement (300) einzugreifen; wobei der Planetenradträger (70) mit der Abtriebswelle (200) verbindbar ist;
**dadurch gekennzeichnet, dass** sie weiter Folgendes umfasst:
- eine elektromechanische Bremse (16) und einen viskoelastischen Dämpfer (17), die funktionell miteinander und funktionell mit dem zentralen Tellerrad (3) verbunden sind,
wobei die elektromechanische Bremse (16) ausgebildet ist, um den viskoelastischen Dämpfer (17) und das zentrale Tellerrad (3) wahlweise zu verriegeln und zu lösen, so dass die elektromechanische Getriebevorrichtung (1) wie folgt konfiguriert werden kann:
in einer aktiven Konfiguration, in welcher der viskoelastische Dämpfer (17) und das zentrale Tellerrad (3) durch die elektromechanische Bremse (16) verriegelt sind und das Planetenradsystem (10) in der Lage ist, über die Drehung des externen Hohlrades (5), welches die Drehung des Planetenradträgers (70) auslöst, Bewegung vom Antriebselement (300) auf die Abtriebswelle (200) zu übertragen, oder umgekehrt,
und
in einer passiven Konfiguration, in welcher die elektromechanische Bremse (16) den viskoelastischen Dämpfer (17) und das zentrale Tellerrad (3) löst, so dass Letzteres zum Drehen frei ist, so dass eine Drehung der Abtriebswelle (200) die Drehung der Umlaufräder (4) auslöst, welche wiederum die Drehung des zentralen Tellerrades (3) auslöst, die vom viskoelastischen Dämpfer (17) gedämpft wird; und
- eine elektronische Steuereinheit, konfiguriert, um die elektromechanische Bremse (16) zu steuern, um die Getriebevorrichtung (1) von der aktiven Konfiguration in die passive Konfiguration übergehen zu lassen, wenn ein Verriegelungszustand des Antriebselements (300) auftritt.

2. Die elektromechanische Getriebevorrichtung (1) gemäß Anspruch 1, wobei die Umlaufräder (4) so montiert sind, dass sie schwenkbar an dem Planetenradträger (70) angebracht sind, um sich um ihre eigene Drehachse (Y) zu drehen und sich integral um die zentrale Drehachse (X) mit dem Planetenradträger (70) zu drehen.

3. Die elektromechanische Getriebevorrichtung (1) gemäß einem oder mehreren der obigen Ansprüche, **dadurch gekennzeichnet, dass** das Planetenradsystem (10) ausgebildet ist, um für eine Geschwindigkeitsreduktion von dem Antriebselement (300) zu der Abtriebswelle (200) oder für eine Geschwindigkeitsmultiplikation von der Abtriebswelle (200) zu dem Antriebselement (300) zu sorgen.

4. Die elektromechanische Getriebevorrichtung (1) gemäß einem oder mehreren der obigen Ansprüche, wobei die Umlaufräder (4) drei an der Zahl sind.

5. Die elektromechanische Getriebevorrichtung (1) gemäß einem oder mehreren der obigen Ansprüche, wobei der Planetenradträger (70) einen Karussellkörper (77) umfasst, welcher die Umlaufräder (4) trägt und außerdem eine Basis (80) umfasst, oder daran befestigt ist, die mit einem Kopplungssitz (81) zur Verbindung mit der Abtriebswelle (200) ausgestattet ist.

6. Die elektromechanische Getriebevorrichtung (1) gemäß einem oder mehreren der obigen Ansprüche, wobei das zentrale Tellerrad (3) einen ersten gezahnten Abschnitt (31) umfasst, der in die Umlaufräder (4) eingreift, und einen zweiten sich in Längsrichtung erstreckenden Abschnitt (32), welcher aus dem äußeren Hohlrad (5) vorsteht und mit dem viskoelastischen Dämpfer (17) verbunden ist.

7. Ein Antriebssystem (100) für Führungssysteme eines Flugzeugs, das Folgendes umfasst:
- ein von einem Motor angetriebenes Antriebselement (300);
- eine Abtriebswelle (200), die mit einer Vorrichtung des Flugzeugs gekoppelt ist oder damit gekoppelt werden kann, um sie anzutreiben;
- eine elektromechanische Getriebevorrichtung (1) gemäß einem oder mehreren der obigen Ansprüche, die mechanisch mit dem Antriebselement (300) und mit der Abtriebswelle (200) verbunden ist, um die Bewegung vom Antriebselement (300) auf die Abtriebswelle (200) zu übertragen oder umgekehrt.

8. Das Antriebssystem (100) gemäß Anspruch 7, wobei das Antriebselement (300) in den äußeren Zahnkranz (52) des externen Hohlrades (5) eingreift und die Abtriebswelle (200) drehbar mit dem Planetenradträger (70) gekoppelt ist.

9. Das Antriebssystem (100) gemäß Anspruch 7 oder 8, wobei die elektronische Steuereinheit konfiguriert ist, um die Arbeit des Antriebselements (300) zu überwachen und den Übergang in die passive Konfiguration auszulösen, wenn es eine Verriegelungssituation erkennt, wobei die elektromechanische Bremse (16) betätigt wird.

10. Das Antriebssystem (100) gemäß einem oder mehreren der Ansprüche 7 bis 9, wobei die elektromechanische Getriebevorrichtung (1), wenn sie sich in der aktiven Konfiguration befindet, in einem umgekehrten Modus angetrieben werden kann, in welchem der viskoelastische Dämpfer (17) und das zentrale Tellerrad (3) durch die elektromechanische Bremse (16) verriegelt werden und eine auf die Abtriebswelle (200) einwirkende Drehung auf das Antriebselement (300) über das Planetenradsystem (10) übertragen wird, wobei die Drehung der Abtriebswelle (200) eine Drehung des Planetenradträgers (70) und somit eine Drehung der Umlaufräder (4) auslöst, die wiederum eine Drehung des externen Hohlrades (5) auslöst, welche die Drehung des Antriebselements (300) auslöst.

## Revendications

1. Appareil de transmission électromécanique (1) pour systèmes d'actionnement pour systèmes de guidage d'un aéronef, comprenant un système de train planétaire (10) configuré pour fournir une transmission cinématique entre un élément d'entraînement (300) et un arbre de sortie (200) ;
dans lequel ledit système de train planétaire (10) comprend : un planétaire central (3) qui peut tourner autour d'un axe de rotation central principal (X), une pluralité de satellites (4) accouplés à rotation à un porte-satellites (70) qui peut lui-même tourner autour de l'axe de rotation central principal (X), et une couronne externe (5) pourvue d'un ensemble de dents intérieur (51) et d'un ensemble de dents extérieur (52) ; lesdits satellites (4) engrenant avec le planétaire central (3) et avec ledit ensemble de dents intérieur (51) de la couronne externe (5), ledit ensemble de dents extérieur (52) étant adapté pour engrener avec l'élément d'entraînement (300), ledit porte-satellites (70) pouvant être associé à l'arbre de sortie (200),
**caractérisé en ce qu'**il comprend en outre :
- un frein électromécanique (16) et un amortisseur viscoélastique (17) qui sont liés fonctionnellement l'un à l'autre et liés fonctionnellement audit planétaire central (3),
ledit frein électromécanique (16) étant configuré pour verrouiller et libérer sélectivement l'amortisseur viscoélastique (17) et le planétaire central (3), de sorte que ledit appareil de transmission électromécanique (1) peut être configuré :
dans une configuration active, dans laquelle l'amortisseur viscoélastique (17) et le planétaire central (3) sont verrouillés par le frein électromécanique (16) et le système de train planétaire (10) est apte à transmettre un mouvement de l'élément d'entraînement (300) à l'arbre de sortie (200) grâce à la rotation de la couronne externe (5) qui entraîne la rotation du porte-satellites (70), ou vice versa, et
dans une configuration passive, dans laquelle le frein électromécanique (16) libère l'amortisseur viscoélastique (17) et le planétaire central (3), de sorte que ce dernier est libre de tourner, de sorte qu'une rotation de l'arbre de sortie (200) entraîne la rotation des satellites (4), qui entraîne à son tour la rotation du planétaire central (3), qui est amortie par l'amortisseur viscoélastique (17) ; et
- une unité de commande électronique configurée pour commander le frein électromécanique (16) afin de faire passer l'appareil de transmission (1) de ladite configuration active à ladite configuration passive quand un état de blocage de l'élément d'entraînement (300) se produit.

2. Appareil de transmission électromécanique (1) selon la revendication 1, dans lequel lesdits satellites (4) sont montés de telle manière qu'ils sont articulés sur ledit porte-satellites (70) afin de tourner autour de leur propre axe de rotation (Y) et de tourner d'un seul tenant autour de l'axe de rotation central (X) avec ledit porte-satellites (70).

3. Appareil de transmission électromécanique (1) selon l'une ou plusieurs des revendications précédentes, **caractérisé en ce que** ledit système de train planétaire (10) est configuré pour fournir une réduction de vitesse dudit élément d'entraînement (300) audit arbre de sortie (200), ou une multiplication de vitesse dudit arbre de sortie (200) audit élément d'entraînement (300).

4. Appareil de transmission électromécanique (1) selon l'une ou plusieurs des revendications précédentes, dans lequel lesdits satellites (4) sont au nombre de trois.

5. Appareil de transmission électromécanique (1) selon l'une ou plusieurs des revendications précédentes, dans lequel ledit porte-satellites (70) comprend un corps de carrousel (77) qui supporte lesdits satellites (4) et comprend aussi, ou est fixé à, un socle (80) pourvu d'un siège d'accouplement (81) pour l'accouplement à l'arbre de sortie (200).

6. Appareil de transmission électromécanique (1) selon l'une ou plusieurs des revendications précédentes, dans lequel ledit planétaire central (3) comprend une première partie dentée (31) qui engrène avec les satellites (4) et une deuxième partie s'étendant longitudinalement (32) qui fait saillie à l'extérieur de la couronne externe (5) et qui est liée à l'amortisseur viscoélastique (17).

7. Système d'actionnement (100) pour systèmes de guidage d'un aéronef, comprenant :
- un élément d'entraînement (300) actionné par un moteur ;
- un arbre de sortie (200) qui est ou peut être accouplé à un dispositif de l'aéronef pour l'entraîner ;
- un appareil de transmission électromécanique (1) selon l'une ou plusieurs des revendications précédentes, qui est lié mécaniquement audit élément d'entraînement (300) et audit arbre de sortie (200) afin de transmettre le mouvement dudit élément d'entraînement (300) à l'arbre de sortie (200) ou vice versa.

8. Système d'actionnement (100) selon la revendication 7, dans lequel ledit élément d'entraînement (300) engrène avec l'ensemble de dents extérieur (52) de ladite couronne externe (5) et ledit arbre de sortie (200) est accouplé à rotation audit porte-satellites (70).

9. Système d'actionnement (100) selon la revendication 7 ou 8, dans lequel ladite unité de commande électronique est configurée pour surveiller le fonctionnement de l'élément d'entraînement (300) et pour provoquer la transition vers ladite configuration passive quand elle détecte une situation de blocage, en activant ledit frein électromécanique (16).

10. Système d'actionnement (100) selon l'une ou plusieurs des revendications 7 à 9, dans lequel ledit appareil de transmission électromécanique (1), lorsqu'il est dans la configuration active, peut être activé dans un mode inversé, dans lequel l'amortisseur viscoélastique (17) et le planétaire central (3) sont bloqués par le frein électromécanique (16) et une rotation imprimée à l'arbre de sortie (200) est transmise à l'élément d'entraînement (300) au moyen du système de train planétaire (10), dans lequel la rotation de l'arbre de sortie (200) entraîne une rotation du porte-satellites (70) et donc une rotation des satellites (4), qui entraîne à son tour une rotation de la couronne externe (5), qui entraîne la rotation de l'élément d'entraînement (300).
